# EUROPEAN PATENT APPLICATION

(11) **EP 2 080 603 A1**
(43) Date of publication of application: **22.07.2009**
(21) Application number: 08150426.8
(22) Date of filing: 18.01.2008
(51) Int. Cl.: B29C 41/12, B05D 1/32

(54) **Manufacturing film or sheet material having openings**

(71) Applicant: Nederlandse Organisatie voor toegepast-natuurwetenschappelijk onderzoek TNO, 2628 VK Delft (NL)
(72) Inventor: Korbee, Roland Alexander, 6133 VR Sittard (NL); Bullema, Jan Eite, 5706 KT Helmond (NL)
(74) Representative: Hatzmann, Martin

(57) **Abstract**

Method for manufacturing film or sheet material comprising openings. The method comprises the steps of providing a support layer (1), the surface of which comprising hydrophobic surface areas (3) at locations and with dimensions which correspond with the locations and dimensions of said openings in the material to be manufactured. On supplying a fluid base material (4,9) for the material to be manufactured, to the surface of the support layer, this material will not wet the surface in the hydrophobic areas. After the fluid base material has been cured, a film or sheet will be made having the requested openings. Such film could e.g. be applied as a cover component (7) for e.g. a microelectronic and/or micromechanical component (10). It is preferred that at least part of said hydrophobic surface areas (3) are formed by means of electro-wetting, controllable by means of an structure of electrodes (2,5,6).

## Description

The invention refers to a method for the manufacturing of film or sheet material, hereinafter called film material, having openings. Besides, the invention refers to a system which is enabled to perform such method.

Plastic films having openings with well defined dimensions can be made by producing a film and making openings in it in a subsequent step. A disadvantage is that the film and the openings are made in two process steps.

One aspect of the present invention is to reduce those both process steps to only one step.

The invention is based on the use of areas having different surface energies, i.e. having hydrophilic and hydrophobic areas, to be used for making e.g. polymeric of other films made from a fluid starting material. Hydrophilic areas can be wetted by a fluid, hydrophobic areas cannot.

According to the invention, a method for manufacturing film or sheet material including openings, preferably comprises next steps:
- provide a support layer, the surface of which comprising hydrophobic surface areas at locations and with dimensions which correspond with the locations and dimensions of said openings in the material to be manufactured;
- supply a fluid base material for the material to be manufactured to the surface of the support layer and make the fluid base material to harden.

As the fluid base or starting material e.g. a fluid monomer or a solution of a monomer or polymer may be used, which can be applied upon the support layer. The hydrophilic areas will be wetted; the hydrophobic areas will not be wetted. After evaporation of the solvent and/or hardening of the monomer a film will come into being only at those locations where the starting fluid was present, viz. at the hydrophilic areas, resulting into a film having openings in it or a film consisting of other patterns of film and not-film areas, e.g. strips, islands, and all kinds of different patterns. The surface is used as a sort of mould, bringing about, viz. by means of the hydrophilic and hydrophobic areas, areas with film material (on the hydrophilic areas) and areas without film material (on the hydrophobic areas). The support surface can be flat, but also cylindrical, enabling the production of endless films.

The locations and/or dimensions of the hydrophilic and hydrophobic areas may be fixed. However, it is possible to make those locations and/or dimensions variable, thus realizing that the support surface can be used for films having different opening patterns. Electro-wetting may be used to form a pattern of hydrophilic (i.e. wettable) and hydrophobic (i.e. non-wettable or dewettable) areas which can easily -even remotely- be varied (note: about wettability, see e.g. http://en.wikipedia.org/wiki/Wetting). The areas may be constituted by sub-areas, e.g. in the form of pixels (well known from e.g. computer and TV display screen) and e.g. controlled by means of an electrode matrix, each crossing point of which may form one hydrophilic or hydrophobic pixel, and where connected pixels may form one hydrophilic or hydrophobic area.

The term electro-wetting was first introduced in 1981 to describe an effect proposed for designing a new type of display device (G. Beni and S. Hackwood, Appl. Phys. Lett. 38, 4, pp.207-209, 1981]. The electro-wetting effect was originally defined as "the change in solid electrolyte contact angle due to an applied potential difference between the solid and the electrolyte". In the past 25 years or so a large number of devices based on electro-wetting have been devised. In particular, electro-wetting has recently been used successfully as one of several techniques used to actuate microdroplets in a digital microfluidic device. In many of these applications electro-wetting allows large numbers of droplets to be independently manipulated under direct electrical control without the use of pumps, valves or even fixed channels. The phenomenon of electro-wetting can be understood in terms of the forces that result from the applied electric field. The fringing field at the corners of the electrolyte droplet tend to pull the droplet down onto the electrode, lowering the macroscopic contact angle, and increasing the droplet contact area. Alternatively electro-wetting can be viewed from a thermodynamic perspective. Since the surface tension of an interface is defined as the Gibbs free energy required to create a certain area of that surface, it contains both chemical and electrical components. The chemical component is just the natural surface tension of the solid/electrolyte interface with no electric field. The electrical component is the energy stored in the capacitor formed between the conductor and the electrolyte.

Amorphous fluoropolymers are suitable electro-wettable materials. Two types of such polymers are commercially available: CYTOP, sold by Asahi Glass Co., and Teflon AF, sold by DuPont. Silicones and polyolefins may be suitable for electro-wetting as well.

Depending of the material used (e.g. any of the materials mentioned), hydrophilic pixels/areas can be formed by means of "electro-wetting" pixels/areas of the hydrophobic material, viz. by energizing such pixels/areas of the "electro-wettable" hydrophobic (by nature) material. In this case the relevant pixels/areas thus are energized (e.g. by a positive or negative voltage) or not-energized: "+" (or "-") / 0.

Inversely, hydrophobic pixels/areas could be formed in a similar way by means of "electro-dewetting" (i.e. made not-wettable, unwettable by and electric voltage or current) pixels/areas of the hydrophilic material, viz. by energizing such pixels/areas of the "electro-dewettable" hydrophilic (by nature) material (note: about dewetting, see e.g. http://en.wikipedia.org/wiki/Dewetting. Also in this case the relevant pixels/areas are energized (e.g. by a positive or negative voltage) or not-energized: "+" (or "-") / 0.

Finally, use could be made of a hydroneutral, i.e. neither (clearly) hydrophobic nor (clearly) hydrophilic, material, having an equivalent water contact angle of around 90 degrees, e.g. in the range of 70-110 degrees as known as such from e.g. WO/2006/074665 and WO/2000/048642. When using such a (mainly) hydroneutral material, hydrophobic and hydrophilic areas/pixels could be made by energizing some areas/pixels e.g. positively (or negatively) to make those areas/pixels hydrophilic (and thus "electro-wetting" those areas/pixels, i.e. making those areas/pixels wettable by an electric field) and energizing other areas/pixels inversely (i.e. negatively or positively respectively) to make those areas/pixels hydrophobic (thus "electro-dewetting the relevant areas/pixels). In this case the relevant pixels/areas thus are energized by a positive voltage or a negative voltage: "+" / "-"), thus enabling to make some pixels/areas hydrophilic (viz. by electro-wetting those pixels/areas by means of applying a first, e.g. positive voltage there), and to make other pixels/areas hydrophobic (viz. by electro-dewetting those pixels/areas by means of applying a second, e.g. negative voltage there).

Hereinafter the present invention will be elucidated by means of some exemplary embodiments and figures.
- Figure 1: illustrates a first exemplary embodiment of the invention, comprising a support layer having an array of small electrodes, which are energized to form some holes in a film;
- Figure 2: illustrates a second exemplary embodiment of the invention, comprising a support layer having a matrix electrode array, the electrodes of which are energized to form some holes in a film;
- Figure 3: illustrates the first exemplary embodiment of the invention, also shown in figure 1, the array of small electrodes, however, being energized to form some "film islands";
- Figure 4: illustrates the second exemplary embodiment of the invention, also shown in figure 2, comprising a matrix electrode array, the electrodes, however, being energized to form some "film islands";
- Figure 5: illustrates a third exemplary embodiment of the invention, comprising an array of components, to be cut or sawn loose, which may be used for covering small electronic or electromechanical components, comprising peripheral openings for contacting purposes;
- Figure 6: illustrates a fourth exemplary embodiment of the invention, similar to the embodiments shown in figure 5, however, comprising, for each individual cover component, a central hole, e.g. to let pass light, and a second, e.g. transparent film layer, covering the first film layer as well as the central hole;
- Figure 7: shows the end product corresponding to figure 5, before cutting or sawing the whole into individual components;
- Figure 8: shows one individual component cut or sawn loose from the product shown in figure 7;
- Figure 9: shows the end product corresponding to figure 6, before cutting or sawing the whole into individual components;
- Figure 10: shows one individual component cut or sawn loose from the product shown in figure 9;
- Figure 11: shows schematically a cover component in accordance with figures 6, 9 and 10, integrated with a MEMS module.

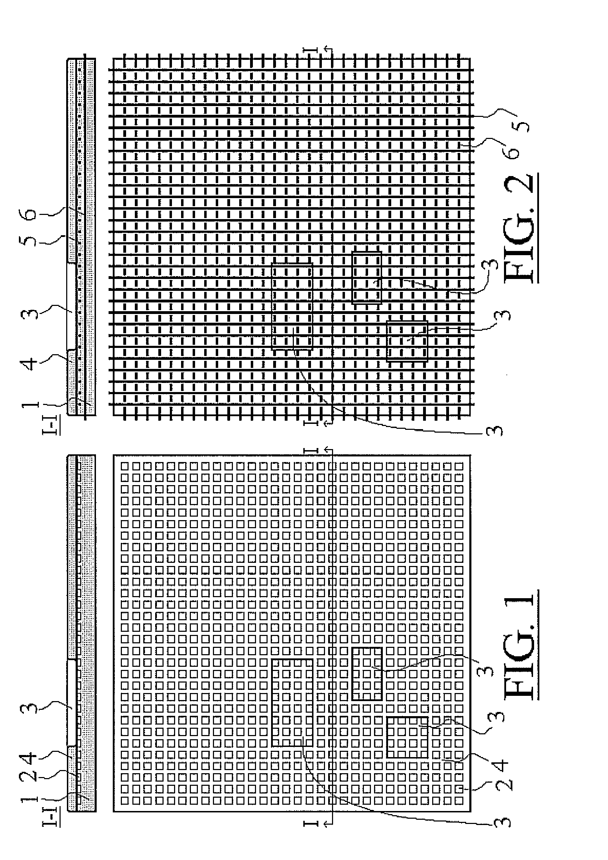

Figure 1 illustrates a first exemplary embodiment of the invention, comprising a support layer 1 of an electro-wettable, hydrophobic material, comprising an array of small electrodes 2, which are used to form a film 4 which comprises some holes 3 in it. The support layer 1 comprises hydrophobic surface areas 3 in which the electrodes 2 are not energized (and thus remain hydrophobic due to the hydrophobic nature of the support layer material. The locations and dimensions correspond with the locations and dimensions of the openings 3 in the material to be manufactured. The rest of the support layer electrodes 2 are energized (+ or -), resulting in a hydrophilic area 4, which matches with the film 4 to be made. Note: as the (not energized) hydrophobic area matches with the holes (or non-film area), both are indicated hereinafter with reference 3; for the same reason, as the (energized) hydrophilic area matches with the film area(s), both are indicated with reference 4. For manufacturing the film 4 and hole 3 component, a fluid base material for the material to be manufactured is supplied to the (whole) surface of the support layer 1. Due to the hydrophilic (energized and thus wettable) properties of the area 4, the base material will wet this surface area 4, while due to the hydrophobic (not energized and thus not wettable) properties of the areas 3, the base material will not wet those surface areas 3 and may, either spontaneously or after any form of stimulation, disappear from the surface areas 3. After the fluid base material has been made to harden, e.g. at increased (curing) temperature, it subsequently can be removed from the support layer 1.

Concerning to the kind of electrodes, voltages to be applied etc., different options are open. An interesting illustration can be found at http://www.controlofmems.umd.edu/proj02-electro-wetting.html, where an electrode structure is used like the electrode structure of figure 1. Another electrode structure, used in the exemplary embodiment of figure 2, can e.g. be found in http://pcf.tnw.utwente.nl/science/current_projects/microfluidics_electro-wetting-/projects/fahong/.

Figure 2 illustrates a second exemplary embodiment of the invention, comprising a support layer having a matrix array comprising stripe electrodes 5 and 6, which are energized selectively to form some hydrophobic areas 3 (not energized) and hydrophilic areas 4 (energized) and thus matching holes 3 in a film 4 after curing of the fluid base material on the support layer 1.

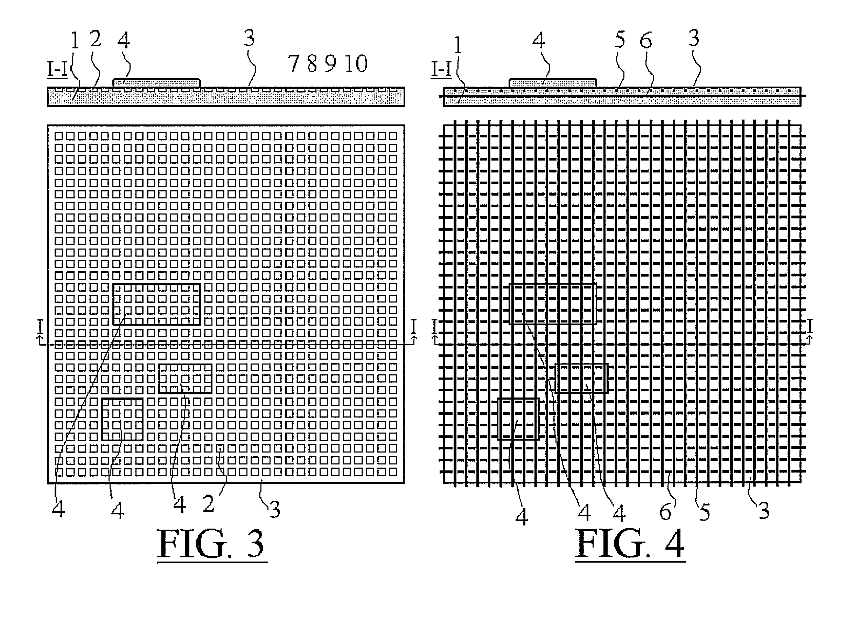

Figure 3 illustrates the first exemplary embodiment of the invention, also shown in figure 1, the array of electrodes, however, being energized "inversely" to form some "film islands". In this case, by choosing appropriate electrode voltages, areas 4 are hydrophilic (energized) and the (remaining) area 3 is hydrophobic (not energized). After supplying a fluid base material for the material to be manufactured to the surface of the support layer 1 this will result in (fluid) base material deposits in the hydrophilic, (electro-)wettable areas 4, while the base material will not wet the remaining, hydrophobic (by nature) area 3 of the support layer 1. After hardening this will result in separate "islands" 4 made of hardened film material.

Figure 4 illustrates the second exemplary embodiment of the invention, also shown in figure 2, comprising a matrix electrode array, the electrodes, however, being energized again as to form some "film islands" 4.

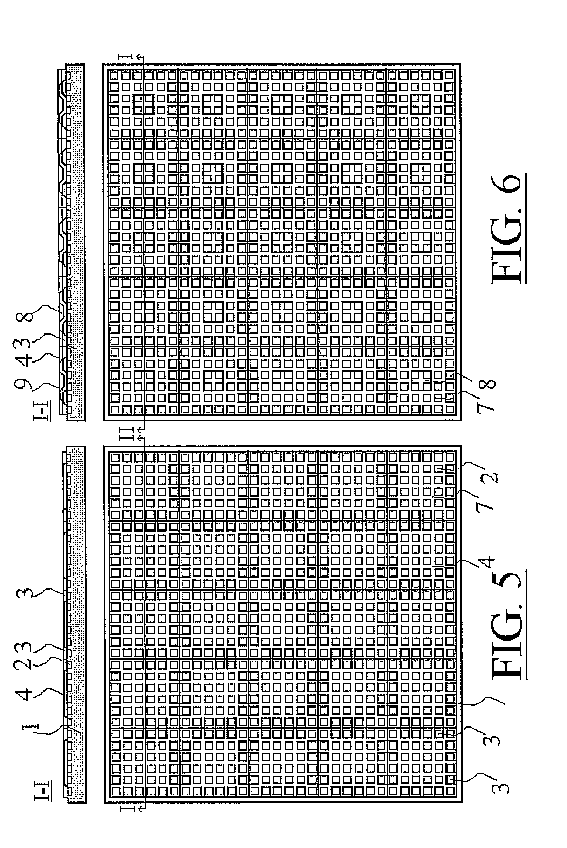

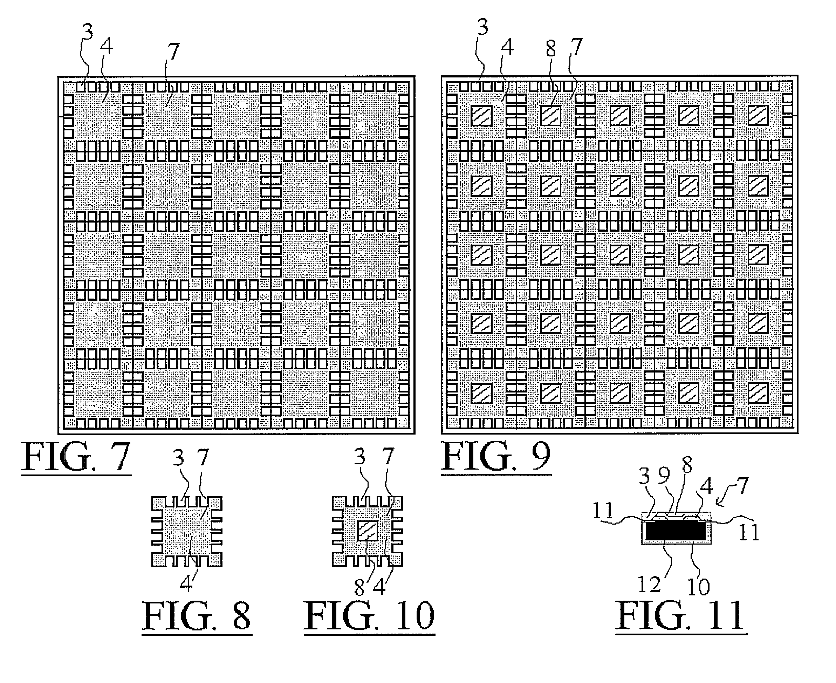

Figure 5 illustrates an exemplary embodiment of the invention, comprising an array of components 7, which have to be cut or sawn loose in the final manufacturing stage (see also figures 7 and 8), which may be used for e.g. covering small electronic or electromechanical components (e.g. ICs, MEMS) , and which comprise peripheral openings 3 which for contacting purposes.

Figure 6 illustrates an exemplary embodiment of the invention, similar to the embodiment shown in figure 5, however, comprising, for each individual cover component 7, a central hole 8, e.g. to let pass light, and a second, e.g. transparent film layer 9, covering the first film layer 4 as well as the central hole 8. The manufacturing process is similar to that of the single film layer 4 in figure 5, except that the electrodes 2 are selectively energized now such that, for each individual component 7, besides the peripheral openings 3, a central (not energized) hydrophobic area and thus an opening 8 is formed. After a first fluid base material has been deposited upon the support layer's surface, wetting on the (energized) hydrophilic areas 4, and after it has been cured, the electrodes in the area 8 are selectively energized in a different way or mode, realizing a hydrophilic (energized) behaviour of the surface in the area 8. Because the first base material has been hardened, the first base material will not move to within area 8. The selective energizing of the electrodes 2 in the peripheral areas 3 will not be changed, so those peripheral areas remain hydrophobic. A second base material 9 is then applied to the whole surface of the support layer 1, which results in that the whole surface, including the (energized and thus hydrophilic now) areas 8, will be covered with the second base material 9, however, with exception of the areas 3 at the borders of the components 7. After hardening the material 9 a transparent or translucent window may be formed which covers the area 8 which was left open by the first film material. After curing the two-layered film, the film can be taken off from the support layer 1 and the individual components 7 can be made by cutting or sawing loose those individual components 7 from the whole.

Figure 7 shows the end product corresponding to figure 5, after being taken from the support layer 1 but before cutting or sawing the whole into individual components, showing the film layer 4 comprising, for each cover component 7 a number of peripheral openings.

Figure 8 shows one individual component 7 cut or sawn loose from the product shown in figure 7.

Figure 9 shows the end product corresponding to figure 6, after being taken from the support layer 1 but before cutting or sawing the whole into individual components, showing the film layer 4 comprising, for each cover component 7 a number of peripheral openings, as well as the central transparent window 8.

Figure 10 shows one individual component cut or sawn loose from the product shown in figure 9.

Finally, Fig. 11 shows schematically a cover component 7 in accordance with figures 6, 9 and 10, integrated with a MEMS module 10. The peripheral openings 3 match with underlying electrical contacts 11 connected to circuitry 12 inside the MEMS module. Via the transparent window 8 the MEMS may transmit and/or receive optical signals to/from the outer world.

## Claims

1. Method for manufacturing film or sheet material comprising openings, the method comprising next steps:
- provide a support layer (1), the surface of which comprising hydrophobic surface areas (3) at locations and with dimensions which correspond with the locations and dimensions of said openings in the material to be manufactured;
- supply a fluid base material (4,9) for the material to be manufactured, to the surface of the support layer and make the fluid base material to harden.

2. Method according to claim 1, at least part of said hydrophilic surface areas (4) being formed by electro-wettable areas, i.e. areas which are wettable as a result of an electric voltage in that area.

3. Method according to claim 1 or 2, at least part of said hydrophobic surface areas (3) being formed by electro-unwettable areas, i.e. areas which are not-wettable as a result of an electric voltage in that area.

4. Method according to claim 2 or 3, said electro-wettable and/or electro-unwettable areas being controllable by means of a structure of electrodes (2,5,6).

5. Method according to claim 2 or 3, said electro-wettable and/or electro-unwettable areas being controllable by means of a conductor matrix (5,6), each electro-wettable and/or electro-unwettable area corresponding with one or more matrix intersections.

6. Film or sheet material, manufactured according to any preceding claim.

7. Cover component (7) for e.g. any microelectronic and/or micromechanical component (10), manufactured according to any preceding claim.
